(19) Europäisches Patentamt / European Patent Office / Office européen des brevets

(11) **EP 3 363 616 B1**

(12) **EUROPEAN PATENT SPECIFICATION**

(45) Date of publication and mention
of the grant of the patent:
**07.10.2020 Bulletin 2020/41**

(21) Application number: **16855163.8**

(22) Date of filing: **05.08.2016**

(51) Int Cl.:
*B29C 55/12* (2006.01)     *B32B 27/08* (2006.01)
*B32B 27/18* (2006.01)     *B32B 27/20* (2006.01)
*B32B 27/32* (2006.01)     *C08J 5/18* (2006.01)
*B29K 23/00* (2006.01)     *B29L 7/00* (2006.01)
*B29L 9/00* (2006.01)

(86) International application number:
**PCT/JP2016/073191**

(87) International publication number:
**WO 2017/064909 (20.04.2017 Gazette 2017/16)**

(54) **BIAXIALLY ORIENTED POLYPROPYLENE FILM, MULTILAYERED FILM INCLUDING METAL FILM, AND FILM CAPACITOR**

BIAXIAL AUSGERICHTETE POLYPROPYLENFOLIE, MEHRSCHICHTFOLIE MIT METALLFOLIE UND FOLIENKONDENSATOR

FILM DE POLYPROPYLÈNE BI-ORIENTÉ, FILM MULTICOUCHE COMPRENANT UN FILM MÉTALLIQUE ET CONDENSATEUR À FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2015 JP 2015201800**

(43) Date of publication of application:
**22.08.2018 Bulletin 2018/34**

(73) Proprietor: **Toray Industries, Inc.**
**Tokyo 103-8666 (JP)**

(72) Inventors:
• **FUJIMOTO, Soichi**
**Tsuchiura-shi**
**Ibaraki 300-0015 (JP)**
• **ASANO, Tetsuya**
**Tsuchiura-shi**
**Ibaraki 300-0015 (JP)**

(74) Representative: **Hoefer & Partner Patentanwälte mbB**
**Pilgersheimer Straße 20**
**81543 München (DE)**

(56) References cited:
WO-A1-2012/002123     WO-A1-2015/012324
WO-A1-2015/129851     DE-T5-112008 002 985
JP-A- 2014 011 181

**Description**

Field

The present invention relates to a biaxially oriented polypropylene film having excellent withstand voltage characteristics at high temperature when the film is used as a dielectric substance for a film capacitor, a metal film-laminated film, and a film capacitor. Specifically, the present invention relates to a biaxially oriented polypropylene film that has excellent withstand voltage characteristics not only at room temperature but also under high temperature conditions and can be suitably used as a dielectric substance for a film capacitor. Background

The biaxially oriented polypropylene film has excellent transparency, mechanical properties, electric properties, and other properties, and thus has been applied in various applications such as packaging applications, tape applications, and electric applications including cable wrappings and capacitors.

As the capacitor applications among these applications, the biaxially oriented polypropylene film is particularly preferably used for capacitors for high voltage in both direct current applications and alternating current applications due to its excellent withstand voltage characteristics and low loss characteristics. In recent years, various electric facilities have been replaced with inverter-based facilities. Accordingly, requirement for capacitors having smaller size and larger capacity has been further increased. In order to satisfy the requirement of such markets in which the capacitor having a smaller size and a larger capacity is required, in particular for automobile applications (including hybrid car applications), photovoltaic power generator applications, and wind power generator applications, it has become essential that the biaxially oriented polypropylene film is made to have high heat resistance while maintaining the withstand voltage characteristics.

As means for improving the withstand voltage characteristics and the heat resistance, it is believed that control of the characteristics of the polypropylene resin composition constituting the biaxially oriented polypropylene film is effective. For example, a method for improving the heat resistance and the withstand voltage characteristics of a biaxially oriented polypropylene film formed using a polypropylene resin composition having excellent stretchability has been proposed (for example, refer to Patent Literature 1). In Patent Literature 1, however, the effect of the heat resistance is limited because the melting point of the film is 170°C or less. Consequently, the biaxially oriented polypropylene film in Patent Literature 1 has not satisfied the high temperature withstand voltage characteristics exceeding 105°C, which have been required for current capacitors.

A method for improving the heat resistance and the withstand voltage characteristics by blending two polypropylenes having different stereoregularity to control the peak temperature of tan $\delta$ to higher temperature has been also proposed (for example, refer to Patent Literature 2). In Patent Literature 2, however, the effect of the heat resistance is limited because the melting point of the film is 175°C or less. Consequently, the biaxially oriented polypropylene film in Patent Literature 2 has not satisfied the high temperature withstand voltage characteristics exceeding 105°C, which have been required for current capacitors.

Patent Literature 3 discloses a stretched polypropylene film that has a low shrinkage factor at 150°C that is comparable to that of polyethylene terephthalate (PET), the stretched polypropylene film being a stretched film that uses a propylene polymer satisfying conditions (a) - (c) and that satisfies conditions (d) and (e). (a) Meso pentad fraction is 96% or more. (b) Non-propylene comonomer content is 0.5 mol% or less. (c) Melt flow rate (MFR) is 0.5g/10 min. or more and 20g/10 min. or less. (d) When polypropylene $\alpha$-crystal (110) surface scattering intensity as measured by wide-angle x-ray scattering is plotted against azimuth angle, the half width of the largest peak is 30 degrees or less. (e) Melting endothermic peak area (total heat of fusion) as measured using differential scanning calorimetry at a rate of temperature increase of 20°C/min. is 115J/g or more, and the ratio (heat of fusion at 150°C/total heat of fusion) of area at 150°C or less (heat of fusion at 150°C) to total heat of fusion is 0.12 or less.

Patent Literature 4 addresses the problem of providing a biaxially oriented polypropylene film that has high strength, low heat shrinkage, and excellent transparency, and is suitable for use as a film for a flat panel display, as a film for the manufacturing process of a display or the like, or as a film for a capacitor. Provided is a biaxially oriented polypropylene film wherein the value for the sum (EMD+TD) of the tensile modulus of elasticity (EMD) in the length direction of the film and the tensile modulus of elasticity (ETD) in the width direction is at least 4.5 GPa, the total haze is at most 1%, and the heat shrinkage rate in both the length direction and width direction of the film after 100 hours of treatment at 85 °C is at most 1.0%.

Citation List

Patent Literature

Patent Literature 1: Japanese Laid-open Patent Publication No. 2008-133351
Patent Literature 2: Japanese Laid-open Patent Publication No. 2010-280795
Patent Literature 3: WO 2015/012324 A1
Patent Literature 4: WO 2015/129851 A1

Summary

Technical Problem

An object of the present invention is to solve the above problems. More specifically, an object of the present invention is to provide a biaxially oriented polypropylene film that has excellent withstand voltage characteristics not only at room temperature but also under high temperature, a metal film-laminated film, and a film capacitor.

Solution to Problem

The object can be achieved by a biaxially oriented polypropylene film as defined in the appended claims, including a polypropylene resin as a main component, a first melting peak Tm1 existing at a highest temperature side in a first temperature rising curve obtained by measuring melting peaks of the film using DSC being 176°C to 180°C, wherein a temperature difference Tm1-Tm2 between a second melting peak Tm2 existing at a highest temperature side in a second temperature rising curve obtained when melting peaks are measured again after first temperature rising and cooling by measuring melting peaks using DSC and the first melting peak Tm1 is 3°C to 15°C, wherein the first melting peak Tm1 and second melting peak Tm2 are obtained as described in the description. Advantageous Effects of Invention

When the biaxially oriented polypropylene film of the present invention is used as the dielectric substance for a capacitor, the withstand voltage characteristics under high temperature excellent. Therefore, the biaxially oriented polypropylene film can be suitably used as a dielectric substance for a capacitor due to excellent withstand voltage characteristics under high temperature. Description of Embodiments

Hereinafter, the biaxially oriented polypropylene film, the metal film-laminated film, and the film capacitor of the present invention will be described in more detail.

The biaxially oriented polypropylene film of the present invention is formed of a polypropylene resin composition including a polypropylene resin as a main component. The term "main component" means that the ratio of the polypropylene resin in the polypropylene resin composition is 80% by mass or more. The ratio is more preferably 85% by mass or more, further preferably 90% by mass or more, and particularly preferably 95% by mass or more.

As the polypropylene resin, a homopolymer of propylene can be mainly used. However, a copolymer of propylene and other unsaturated hydrocarbons may be used, or the copolymer of propylene and other unsaturated hydrocarbons may be blended with the homopolymer of propylene as long as the object of the present invention is not impaired. Examples of monomer components constituting such a copolymer include ethylene, propylene (in the case of a copolymerized blended composition), 1-butene, 1-pentene, 3-methylpentene-1, 3-methylbutene-1, 1-hexene, 4-methylpentene-1, 5-ethylhexene-1, 1-octene, 1-decene, 1-dodecene, 1-tetradecene, 1-hexadecene, 1-heptadecene, 1-octadecene, 1-eicosene, vinylcyclohexene, styrene, allylbenzene, cyclopentene, norbornene, and 5-methyl-2-norbornene. As the copolymerized amount of the other unsaturated hydrocarbons or the blended amount of the copolymer, the ratio of the other unsaturated hydrocarbons described above in the propylene resin is preferably set to less than 1 mol% from the viewpoint of the withstand voltage characteristics and dimensional stability.

The cold xylene soluble fraction (hereinafter abbreviated to as CXS) of the polypropylene resin constituting the biaxially oriented polypropylene film of the present invention is preferably 4% by mass or less. Here, the CXS means a polypropylene component dissolved in xylene when a dissolved film is precipitated at 20°C after the film is completely dissolved in xylene at 135°C. The component is considered to correspond to a component that is difficult to crystallize due to reasons of low stereoregularity and low molecular weight. The CXS of the polypropylene resin is more preferably 3% by mass or less, further preferably 2% by mass or less, and particularly preferably 1% by mass or less. When the CXS is more than 4% by mass, the withstand voltage characteristics and the dimensional stability of the biaxially oriented polypropylene film may deteriorate. In order to control the CXS of the polypropylene resin within the above range, a method of improving catalyst activity when the polypropylene resin is obtained, a method of washing the obtained polypropylene resin with a solvent or a propylene monomer itself, and other methods are employed.

The mesopentad fraction (mmmm) of the biaxially oriented polypropylene film of the present invention and the polypropylene resin constituting the film is preferably in a range of 0.950 to 0.990, more preferably in a range of 0.960 to 0.990, further preferably in a range of 0.970 to 0.990, and particularly preferably in a range of 0.970 to 0.985. The mesopentad fraction is an index indicating the stereoregularity of the crystal phase of polypropylene resins measured by a nuclear magnetic resonance method (what is called an NMR method). As the value of the mesopentad fraction

3

becomes higher, a degree of crystallization and a melting point become higher and thus the biaxially oriented polypropylene film has excellent withstand voltage characteristics not only at room temperature but also at high temperature. Consequently, the higher value of the mesopentad fraction is preferable. When the mesopentad fraction (mmmm) of the biaxially oriented polypropylene film and the polypropylene resin is less than 0.950, the withstand voltage characteristics and the dimensional stability may deteriorate. On the other hand, when the mesopentad fraction (mmmm) of the biaxially oriented polypropylene film and the polypropylene resin is more than 0.990, the biaxially oriented polypropylene film may not be stably obtained due to poor film formability and the withstand voltage characteristics may deteriorate due to excessively high crystallinity. In order to control the mesopentad fraction of the biaxially oriented polypropylene film and the polypropylene resin within the above range, a method of washing the obtained polypropylene resin powder with a solvent such as n-heptane, a method of adequately selecting a catalyst and/or a cocatalyst and selecting the components of the polypropylene resin composition, and other methods are preferably employed.

The melt flow rate (hereinafter, abbreviated as MFR) of the polypropylene resin constituting the biaxially oriented polypropylene film of the present invention is preferably 0.5 g/10 minutes to 10 g/10 minutes, more preferably 1 g/10 minutes to 8 g/10 minutes, further preferably 1.5 g/10 minutes to 5 g/10 minutes, and particularly preferably 2 g/10 minutes to 5 g/10 minutes when the MFR is measured in accordance with JIS K 7210 (1995) Condition M (230°C, 2.16 kg). When the MFR of the polypropylene resin is less than 0.5 g/10 minutes, the polypropylene resin has poor film formability and thus the biaxially oriented polypropylene film may not be obtained. On the other hand, when the MFR of the polypropylene resin is more than 10 g/10 minutes, the withstand voltage characteristics may deteriorate. In order to control the MFR of the polypropylene resin within the above range, a method of controlling the average molecular weight and the molecular weight distribution of the polypropylene resin and other methods are preferably employed.

The biaxially oriented polypropylene film of the present invention has the first melting peak Tm1 existing at the highest temperature side in the first temperature rising curve obtained by measuring melting peaks using Differential Scanning Calorimetry (DSC) is 176°C to 180°C. The first melting peak Tm1 is more preferably 176°C to 179°C, further preferably 176°C to 178°C, and particularly preferably 177°C to 178°C. A plurality of the melting peaks may exist in the first temperature rising curve obtained by the DSC measurement in the case that the film has a plurality of crystal forms and in the case that polymers having different melting points are mixed. However, it is effective for improvement of the withstand voltage characteristics under high temperature that the first melting peak Tm1 existing at the high temperature side is within the above range. If the first melting peak Tm1 is less than 176°C, the withstand voltage characteristics under high temperature may deteriorate due to insufficient crystallinity and heat resistance of the film. On the other hand, if the first melting peak Tm1 is more than 180°C, this high first melting peak Tm1 means that the crystallinity of the film is excessively high. This may result in easy occurrence of dielectric breakdown by locally flowing electric current when the film is used as the dielectric substance for a capacitor or lowering in productivity due to difficulty in stretching during the production of the film. As described above, the inventors of the present invention have found that the biaxially oriented polypropylene film has poor withstand voltage characteristics under high temperature when the temperature of the first melting peak Tm1 is excessively high or excessively low. Consequently, the inventors of the present invention have been made it possible to control the first melting peak Tm1 of the biaxially oriented polypropylene film within the preferable range by extensive studies. In order to control the first melting peak Tm1 within the above temperature range, the above polypropylene resin may be used, and specific conditions may be employed in the stretching process during the film formation as described below.

The biaxially oriented polypropylene film of the present invention has a temperature difference (Tm1-Tm2) between the second melting peak Tm2 existing at the highest temperature side in a second temperature rising curve obtained when the melting peaks are measured again after the first temperature rising and cooling by measuring melting peaks using DSC and the first melting peak Tm1 is 3°C to 15°C. The difference (Tm1-Tm2) is preferably 3°C to 10°C, further preferably 4°C to 9°C, and particularly preferably 5°C to 8°C. The second melting peak Tm2 means the melting peak that the propylene resin for forming the film originally has. This value is a value that a temperature shift of the melting peak caused by the stretching during the film formation is canceled. The second melting peak Tm2 reflects resin deterioration caused by passing through an extruder during the film formation and thus is different from the melting peak of the raw material resin itself before the film formation. A value that is 1°C to 5°C higher than the original melting point of the raw material resin is obtained. In other words, the temperature difference (Tm1-Tm2) means the degree of temperature shift of the melting point caused by promoting crystallization in the stretching process during the film formation. When the temperature difference (Tm1-Tm2) is less than 3°C, promotion of the crystallization during the stretching process is insufficient and thus the withstand voltage characteristics may deteriorate. On the other hand, the temperature difference (Tm1-Tm2) is more than 15°C, the film may break due to excessive orientation during the stretching process to break the film or the withstand voltage characteristics may deteriorate due to easily causing dielectric breakdown. In order to control the temperature difference (Tm1-Tm2) within the above temperature range, the above polypropylene resin may be used, and specific conditions may be employed in the extrusion process and the stretching process during the film formation as described below.

The biaxially oriented polypropylene film of the present invention preferably has a glossiness of 120% to 150% on both surfaces. The glossiness is more preferably 123% to 145%, further preferably 125% to 140%, and particularly preferably 128% to 138% on both surfaces. When the glossiness is less than 120% on at least one surface, the density of light scattering on the film surface is increased. In other words, this means that much unevenness exists on the film surface. The withstand voltage characteristics may deteriorate due to this unevenness. On the other hand, when the glossiness is more than 150% on at least one surface, the biaxially oriented polypropylene film has poor slip properties due to less unevenness on the surface of the film. This may easily cause transport wrinkles in a film transportation process during the film formation and processing, resulting in worsening the winding shape of a film roll or, in some cases, breaking the film. In order to control the glossiness within the above range on both surfaces, the above polypropylene resin may be used, and specific conditions may be employed in the casting process and the longitudinal stretching process during the film formation as described below

The biaxially oriented polypropylene film of the present invention preferably has both heat shrinkage ratios of -1% to 5% in a longitudinal direction (a direction where the film flows during the film formation) and a width direction (a direction orthogonal to the longitudinal direction on the film plane) under the treatment conditions of 120°C for 15 minutes. The heat shrinkage ratios in the longitudinal direction and the width direction under the treatment conditions of 120°C for 15 minutes are more preferably -0.5% to 4.5%, further preferably -0.3% to 4%, and particularly preferably -0.2% to 3.5%. When the heat shrinkage ratio in either longitudinal direction or width direction under the treatment conditions of 120°C for 15 minutes is less than -1% (that is, when the coefficient of thermal expansion is more than 1%), transport wrinkles may be generated due to large thermal expansion of the film on a cooling can during a metal deposition process. This may cause deposition spots. The biaxially oriented polypropylene film also may have poor withstand voltage characteristics under high temperature. On the other hand, when the heat shrinkage ratio in either longitudinal direction or width direction under the treatment conditions of 120°C for 15 minutes is more than 5%, transport wrinkles are generated due to large thermal expansion of the film on a cooling can during a metal deposition process in the same manner as above. This may generate deposition spots. The biaxially oriented polypropylene film also may have poor withstand voltage characteristics under high temperature. In order to control both heat shrinkage ratios in the longitudinal direction and the width direction under the treatment conditions of 120°C for 15 minutes within the above range, the above polypropylene resin may be used, and specific conditions may be employed in the casting process, the longitudinal stretching process, the transverse stretching process, and the heat treatment process during the film formation as described below.

The biaxially oriented polypropylene film of the present invention preferably has both heat shrinkage ratios of -1% to 10% in a longitudinal direction and a width direction under the treatment conditions of 140°C for 15 minutes. The heat shrinkage ratios in the longitudinal direction and the width direction under the treatment conditions of 140°C for 15 minutes are more preferably 0% to 8%, further preferably 0% to 7%, and particularly preferably 0% to 6%. When the heat shrinkage ratio in either longitudinal direction or width direction under the treatment conditions of 140°C for 15 minutes is less than - 1% (that is, when the coefficient of thermal expansion is more than 1%), transport wrinkles may be generated due to large thermal expansion of the film on a cooling can during a metal deposition process. This may generate deposition spots. The biaxially oriented polypropylene film also may have poor withstand voltage characteristics under high temperature. On the other hand, when the heat shrinkage ratio in either longitudinal direction or width direction under the treatment conditions of 140°C for 15 minutes is more than 10%, transport wrinkles are generated due to large thermal expansion of the film on a cooling can during a metal deposition process in the same manner as above. This may generate deposition spots. The biaxially oriented polypropylene film also may have poor withstand voltage characteristics under high temperature. In order to control both heat shrinkage ratios in the longitudinal direction and the width direction under the treatment conditions of 140°C for 15 minutes within the above range, the above polypropylene resin may be used, and specific conditions may be employed in the casting process, the longitudinal stretching process, the transverse stretching process, and the heat treatment process during the film formation as described below.

The biaxially oriented polypropylene film of the present invention preferably has a film thickness of 1.0 $\mu$m to 10 $\mu$m. The film thickness is more preferably 1.2 $\mu$m to 7 $\mu$m, further preferably 1.5 $\mu$m to 5 $\mu$m, and particularly preferably 1.5 $\mu$m to 3 $\mu$m. When the film thickness is less than 1.0 $\mu$m, the mechanical strength and the withstand voltage characteristics may deteriorate and the film may break during the film formation and film processing. On the other hand, when the film thickness is more than 10 $\mu$m, a capacity per volume may decrease when the biaxially oriented polypropylene film is used as the dielectric substance for a capacitor. The film thickness can be adequately set by adjusting a discharging rate of the resin or adjusting a draft ratio during sheet formation. However, as the film thickness becomes thinner, the film break during the film formation occurs more easily. Consequently, the biaxially oriented polypropylene film can be stably formed by using the above polypropylene resin and employing specific conditions in the longitudinal stretching process and the transverse stretching process during the film formation as described below.

The biaxially oriented polypropylene film of the present invention may include a branched-chain polypropylene for the purpose of improving film formability and controlling a film surface shape. In this case, the branched-chain polypropylene is preferably a branched-chain polypropylene for which a melt tension (MS) measured at 230°C and the melt flow rate (MFR) satisfy a relational expression of log (MS)>-0.56 log (MFR)+0.74. In order to obtain the branched-chain polypropylene for which the melt tension (MS) measured at 230°C and the melt flow rate (MFR) satisfy a relational expression of log (MS)>-0.56 log (MFR)+0.74, a method of blending a polypropylene containing a high molecular weight component in high content, a method of blending an oligomer or a polymer having a branched structure, a method of introducing a branched long chain structure in polypropylene molecules as described in Japanese Patent Application Laid-open No. S62-121704, a method as described in Japanese Patent No. 2869606 or other methods are preferably employed. Specific examples include "Profax (trade name) PF-814" manufactured by LyondellBasell Industries N. V. and "Daploy HMS-PP" (WB130HMS, WB135HMS, and the like) manufactured by Borealis AG. Of these products, a resin obtained by an electron beam crosslinking method is preferably used due to less gel components in the resin. The branched-chain polypropylene described here means a polypropylene having 5 or less internal 3-substituted olefins relative to 10,000 carbon atoms. Existence of the internal 3-substituted olefins can be confirmed by proton ratios of $^1$H-NMR spectrum. The branched-chain polypropylene has an action as an $\alpha$ crystal nucleating agent and can also form a rough surface due to crystal morphology as long as the amount to be added is in a certain range. Specifically, use of the branched-chain polypropylene allows a spherulite size of the polypropylene generated during the cooling process of a melt-extruded resin sheet to be controlled in a small size, generation of insulation defects generated during the stretching process to be reduced, and the biaxially oriented polypropylene film having excellent withstand voltage characteristics to be obtained.

When the biaxially oriented polypropylene film of the present invention includes the branched-chain polypropylene, the content is preferably 0.05% by mass to 3% by mass, more preferably 0.1% by mass to 2% by mass, further preferably 0.3% by mass to 1.5% by mass, and particularly preferably 0.5% by mass to 1% by mass. When the content of the branched-chain polypropylene is less than 0.05% by mass, the above effect may not be obtained. On the other hand, when the content of the branched-chain polypropylene is more than 3% by mass, the stereoregularity as the biaxially oriented polypropylene film may decrease and thus the withstand voltage characteristics may deteriorate.

The polypropylene resin composition constituting the biaxially oriented polypropylene film of the present invention preferably includes various additives such as a crystal nucleating agent, an antioxidant, a heat stabilizer, a lubricant, an antistatic agent, an antiblocking agent, a filler, a viscosity modifier, and a coloring inhibitor as long as these additives do not impair the object of the present invention.

Of these additives, selection of the type and the content of the antioxidant are important from the viewpoint of long-term heat resistance. Accordingly, the antioxidant is preferably a phenolic antioxidant having steric hindrance and at least one of the antioxidants is preferably a high molecular weight antioxidant having a molecular weight of 500 or more. Specifically, for example, 2,6-di-t-butyl-p-cresol (BHT: molecular weight 220.4), 1,3,5-trimethyl-2,4,6-tris(3,5-di-t-butyl-4-hydroxybenzyl)benzene (for example, Irganox (registered trademark) 1330, manufactured by BASF SE, molecular weight 775.2), and tetrakis[methylene-3(3,5-di-t-butyl-4-hydroxyphenyl)propionate]methane (for example, Irganox (registered trademark) 1010, manufactured by BASF SE, molecular weight 1177.7), and the like may be preferably used singly or in combination. The total content of these antioxidants is preferably 0.03% by mass to 1.0% by mass, more preferably 0.1% by mass to 0.9% by mass, further preferably 0.15% by mass to 0.8% by mass, and particularly preferably 0.15% by mass to 0.6% by mass relative to the total amount of the polypropylene resin composition. When the content of the antioxidant in the polypropylene resin composition is less than 0.03% by mass, the antioxidant effect is less likely obtained and thus the long-term heat resistance may deteriorate. On the other hand, when the content of the antioxidant in the polypropylene resin composition is more than 1.0% by mass, the withstand voltage characteristics at high temperature may deteriorate.

The ash content of the biaxially oriented polypropylene film of the present invention is preferably 50 ppm (based on mass, the same shall apply hereinafter) or less, more preferably 40 ppm or less, further preferably 30 ppm or less, and particularly preferably 20 ppm or less. When the ash content is more than 50 ppm, the withstand voltage characteristics of the biaxially oriented polypropylene film may deteriorate. In order to control the ash content within the above range, use of a raw material having less catalyst residue is important. A method of reducing contamination from the extrusion system during the film formation as much as possible, for example, a method of sufficiently cleaning the flow pass where the polymer flows using an undeteriorated polypropylene resin before the film formation starts may be preferably employed.

The biaxially oriented polypropylene film of the present invention preferably has a surface wet tension of at least one surface of 37 mN/m to 50 mN/m, more preferably 38 mN/m to 49 mN/m, further preferably 39 mN/m to 48 mN/m, and particularly preferably 40 mN/m to 47 mN/m. When the surface wet tension is less than 37 mN/m, adhesion to metal may be insufficient at the time of metal deposition. On the other hand, when the surface wet tension is more than 50 mN/m, the withstand voltage characteristics may deteriorate. Usually, the biaxially oriented polypropylene film has low surface energy. The surface wet tension is about 30 mN/m. In order to control the surface wet tension within the above range, a method of applying surface treatment after biaxial stretching in film formation is preferably employed. Specifically, corona discharge treatment, plasma treatment, glow treatment, flame treatment, and the like may be employed.

The biaxially oriented polypropylene film of the present invention is preferably obtained by forming a sheet using the above-described polypropylene resin as the main component and carrying out biaxial stretching. As the method for biaxial stretching, the biaxially oriented polypropylene film can be obtained by any one of an inflation-simultaneous biaxial stretching method, a tenter simultaneous biaxial stretching method, and a tenter sequential biaxial stretching method. The tenter sequential biaxial stretching method is preferably employed from the viewpoint of film formation stability and film thickness uniformity. In particular, stretching is preferably carried out in the longitudinal direction and thereafter in the width direction.

For the biaxially oriented polypropylene film of the present invention, a function layer may be laminated onto at least one surface for the purpose of providing various effects. As the laminated structure, two-layer lamination, three-layer lamination, or multilayer lamination of more than three layers may be employed. As the method for laminating, for example, any one of a feed block method or multi manifold method by co-extrusion and a method of laminating polypropylene films with each other by lamination can be employed. In particular, for the purpose of improving formability of the biaxially oriented polypropylene film, laminating an easily slidable layer in which fine particles are uniformly placed is preferable as long as the withstand voltage characteristics does not decrease.

Subsequently, a method for producing the biaxially oriented polypropylene film of the present invention will be described. The present invention, however, is not limited to the method.

First, the polypropylene resin composition including the preferable polypropylene resin described above is fed to a single-screw melt extruder and melt extrusion is carried out at 200°C to 220°C from the viewpoint of reducing polymer deterioration. Subsequently, foreign matters and degraded polymers are removed with a filter installed in the middle of a polymer tube and thereafter the melted polymer is discharged from a T die onto a casting drum to give an unstretched sheet. A shear rate in the T die during the extrusion is preferably set to 100 sec$^{-1}$ to 1,000 sec$^{-1}$ from the viewpoint of reducing degradation of the polymer. The shear rate is more preferably 150 sec$^{-1}$ to 800 sec$^{-1}$, further preferably 200 sec$^{-1}$ to 700 sec$^{-1}$, and particularly preferably 300 sec$^{-1}$ to 600 sec$^{-1}$. The shear rate in the T die is represented by the following formula (1). When the shear rate in the T die is less than 100 sec$^{-1}$, insufficient shear is applied and thus crystal array in the unstretched sheet is insufficient. This results in difficulty in uniform stretching in the subsequent stretching process and thus the biaxially oriented polypropylene film having uniform crystallinity may not be obtained. On the other hand, when the shear rate in the T die is more than 1,000 sec$^{-1}$, excessive shear is applied to the polymer and the polymer may be degrade. This may deteriorate the withstand voltage characteristics.

$$\text{Shear rate (sec}^{-1}) = 6Q/\rho Wt^2 \qquad\qquad (1)$$

Where Q: Flow rate (kg/sec)
p: Specific gravity (kg/cm$^3$)
W: Groove width of T die (cm)
t: Groove gap of T die (cm)

The flow rate of the polypropylene resin composition and the groove width and groove gap of the T die are adequately adjusted so that the shear rate in the T die is within the above range. The flow rate of the polypropylene resin composition is preferably in a range of 150 kg/hr to 500 kg/hr from the viewpoint of extrusion stability. The groove width of the T die is preferably in a range of 500 mm to 1,000 mm. The groove gap of the T die is preferably in a range of 0.8 mm to 2 mm from the viewpoint of inner pressure in the extrusion system and accuracy of casting.

The casting drum preferably has a surface temperature of 60°C to 100°C from the viewpoint of controlling the glossiness within an appropriate range. The surface temperature of the casting drum is more preferably 70°C to 98°C, further preferably 80°C to 96°C, and particularly preferably 85°C to 95°C. The time for tightly attaching the extruded sheet onto the casting drum after the melted sheet discharged from T die lands to the casting drum is preferably 1 second or more, preferably 1.5 seconds or more, further preferably 2 seconds or more, and particularly preferably 2.5 seconds or more from the viewpoint of solidifying the melted sheet to promote crystal growth, that is, preventing generation of thickness unevenness in the longitudinal direction.

As methods for tightly attaching the sheet onto the casting drum, methods such as an electrostatic application method, an air knife method, a nip roll method, and an underwater casting method may be employed. The air knife method is preferable from the viewpoint of reduction in thickness unevenness and high speed film formation.

Use of the unstretched sheet can carry out stretching that is uniform and can promote crystallization in the stretching process described below and thus the first melting peak Tm1 and the temperature difference (Tm1-Tm2) of the biaxially oriented polypropylene film can be controlled within a preferable range. As specific stretching conditions, first, a temperature for stretching the unstretched sheet in the longitudinal direction is controlled. As a method for controlling the temperature, a method of using a temperature-controlled rotating roll, a method of using a hot air oven, and other methods can be employed. The film temperature during the stretching in the longitudinal direction is preferably 100°C to 125°C, more preferably 105°C to 123°C, further preferably 110°C to 120°C, and particularly preferably 110°C to 115°C from the viewpoint of promotion of the crystallization of the film and stable film formation. The stretching ratio is preferably 5.7 times to 6.5 times, more preferably 5.8 times to 6.4 times, further preferably 5.9 times to 6.3 times, and particularly preferably 6.0 times to 6.2 times from the viewpoint of promotion of the crystallization of the film and stable film formation. As the stretching ratio becomes higher, crystallinity in the film is more promoted and the withstand voltage characteristics under high temperature becomes more excellent. The stretching having a stretching ratio of more than 6.5 times may likely cause firm break in the longitudinal stretching process and firm break in the subsequent transverse stretching process.

The stretching speed in the longitudinal direction is preferably 3,550,000 %/minute to 5,500,000 %/minute, more preferably 3,600,000 %/minute to 5,400,000 %/minute, further preferably 3,700,000 %/minute to 5,200,000 %/minute, and particularly preferably 3,800,000 %/minute to 5,000,000 %/minute from the viewpoint of promotion of the crystallization of the film and stable film formation. By controlling the stretching speed in the longitudinal direction, the orientation and further the crystallinity of the biaxially oriented polypropylene film can be controlled. By stretching the unstretched sheet in the above preferable range, the first melting peak Tm1 can be controlled. When the stretching speed in the longitudinal direction is less than 3,550,000 %/minute, the first melting peak Tm1 becomes lower than the preferable range and thus the withstand voltage characteristics under high temperature may deteriorate. On the other hand, when the stretching speed in the longitudinal direction is more than 5,500,000 %/minute, the first melting peak Tm1 becomes higher than the preferable range and thus the withstand voltage characteristics under high temperature may deteriorate. In addition, the film break may occur. A method for calculating the stretching speed in the longitudinal direction is represented by Formula (2). The stretching zone where the unstretched sheet is stretched by the rotating roll method is determined to be a tangential distance between rolls having different peripheral speeds. The stretching speed is assumed to be uniform in the stretching zone.

$$\text{Stretching speed (\%/minute)} = (MDX-1) \times 100/(L/V) \quad (2)$$

Where MDX: stretching ratio in longitudinal direction (times)
L: Stretching zone (m)
V: Film formation speed after stretching (m/minute)

In order to achieve a high stretching ratio and high speed stretching without film break, a mechanism in which heat quantity is locally provided to the film just before stretching by a radiation heater to assist the stretching is preferably introduced. In particular, when the stretching is carried out in a high stretching ratio, orientation is strongly generated. Consequently, providing at least one surface of the film just before stretching with the heat quantity using the radiation heater is more preferable from the viewpoint of improving stretchability of the film and achieving the high stretching ratio and the high speed stretching. Heating with the radiation heater is a non-contact heating method and thus sticking of the film to the rolls can be reduced and the film can be uniformly heated by instantaneously providing the heat quantity. Therefore, this heating is effective for stable film formation. The distance between the radiation heater and the film is preferably 10 mm to 50 mm. When the distance between the radiation heater and the film is less than 10 mm, excessive heat quantity may be provided to the film and thus promotion of the crystallinity may be insufficient. On the other hand, when the distance between the radiation heater and the film is more than 50 mm, insufficient heat quantity may be provided to the film and thus the film may break. The surface temperature of the radiation heater is preferably 500°C to 1,200°C, more preferably 550°C to 1,000°C, further preferably 600°C to 900°C, and particularly preferably 700°C to 800°C. When the surface temperature of the radiation heater is less than 500°C, the film temperature just before stretching is not raised to the above temperature range and thus the film may break. On the other hand, when the surface temperature of the radiation heater is more than 1,200°C, the film temperature just before stretching is exceed the above temperature range and promotion of crystallinity may be insufficient.

During the stretching in the longitudinal direction of the film, what is called neckdown, which is a phenomenon of reducing the film width, is observed. The neckdown ratio (Film width after stretching/Film width before stretching × 100) is preferably 90% to 99% from the viewpoint of thickness unevenness.

Subsequently, the film is introduced into a tenter type stretching machine with the film edges being gripped. The introduced film is heated to preferably 140°C to 165°C, more preferably 142°C to 163°C, further preferably 144°C to 160°C, and particularly preferably 145°C to 155°C and stretched 8 times to 15 times, more preferably 9 times to 14 times, further preferably 10 times to 13 times, and particularly preferably 10 times to 12 times in the width direction from the viewpoint of promoting crystallization of the film and stable film formation. The transverse stretching speed at this transverse stretching is preferably 15,000 %/minute to 45,000 %/minute, more preferably 18,000 %/minute to 40,000 %/minute, further preferably 20,000 %/minute to 35,000 %/minute, and particularly preferably 25,000 %/minute to 30,000 %/minute from the viewpoint of promotion of the crystallization of the film and stable film formation.

Subsequently, the film is thermally treated. The heat treatment may be carried out as it is in the tenter without changing the heat treatment temperature. The treatment temperature, however, is preferably 147°C to 167°C, more preferably 150°C to 165°C, further preferably 152°C to 163°C, and particularly preferably 155°C to 160°C from the viewpoint of the withstand voltage characteristics under high temperature. The heat treatment may be carried out while the film is being relaxed in the longitudinal direction and/or the width direction. In particular, the relaxation ratio in the width direction is preferably set to 5% to 15%, more preferably 8% to 13%, further preferably 9% to 12%, and particularly preferably 10% to 12% from the viewpoint of thermal dimensional stability in the width direction.

Finally, when a metal film is formed on the film by deposition, corona discharge treatment in air, in nitrogen, in carbon dioxide gas, or in a mixed gas thereof is carried out to the surface of the biaxially stretched polypropylene film where the deposition is carried out from the viewpoint of improving adhesion of the deposited metal and thus a metal film-laminated film can be obtained.

The biaxially oriented polypropylene film of the present invention is preferably used as the dielectric substance for a capacitor. The type of the capacitor is not particularly limited. Specifically, the capacitor may be either foil-wound capacitor or metal deposited film capacitor from the viewpoint of electrode configuration. An oil immersion type capacitor impregnated with insulating oil and a dry type capacitor in which insulating oil is not used at all are also preferably used. From the viewpoint of the shape, the capacitor may be either winding type capacitor or lamination type capacitor. The biaxially oriented polypropylene film of the present invention is particularly preferably used as a metal deposited film capacitor from the viewpoint of its characteristics.

In the present invention, it is preferable that a metal film is provided on the surface of the above biaxially oriented polypropylene film so as to form a metal film-laminated film. The method for forming the metal film-laminated film is not particularly limited. For example, a method for depositing aluminum onto at least one surface of the film to provide a metal film such as aluminum deposited film that acts as an internal electrode in a film capacitor is preferably employed. At the time of providing the aluminum film, other metal components such as nickel, copper, gold, silver, chromium, and zinc may be deposited simultaneously or sequentially with aluminum. A protection layer formed of oil and the like may also be provided on the deposited film.

The thickness of the metal film of the metal film-laminated film is preferably 20 nm to 100 nm from the viewpoint of electrical properties and self-heel properties of the film capacitor. From the same reason, the surface resistance value of the metal film is preferably 1 $\Omega/\square$ to 20 $\Omega/\square$. The surface resistance value can be controlled by metal species to be used and a film thickness.

In the present invention, aging treatment or thermal treatment of the metal film-laminated film may be carried out at specific temperature after the metal film is formed, if needed. Coating using polyphenylene oxide and the like may be applied to at least one surface of the metal film-laminated film for insulation or other purposes.

From thus obtained metal film-laminated film, a film capacitor can be obtained by laminating or winding using various methods. A preferable method for producing a winding type capacitor will be described below. The method, however, is not particularly limited to this method.

Aluminum was deposited in vacuo on one surface of the biaxially oriented polypropylene film of the present invention. At this deposition, aluminum is deposited in a stripe shape formed in a longitudinal direction of the film. The gaps between the aluminum-deposited parts having the stripe shape are margin parts where aluminum is not deposited. Subsequently, blades are put into the center of each of the deposited parts and the center of each of the margin parts on the surface to slit the deposited film. Winding reels in which tapes having a surface having a margin at one side are wound are prepared. From the winding reels in which tapes having a margin at right side or left side are wound, the winding reel in which the tape having a margin at right side is wound and the winding reel in which the tape having a margin at left side is wound are selected one by one. These two tapes are overlapped and wound so that the vapor deposition parts protrude from the margin parts in the width direction to give a wound body. The winding type film capacitor can be obtained by pulling out a core material from this wound body and pressing the remaining part, thermally spraying melted metal at both ends to form external electrodes, and subsequently welding lead wires to the melted metal sprayed parts. Film capacitors are widely applied for vehicles, home electric appliances (for example, televisions and refrigerators), general noise absorbing, automobiles (for example, hybrid cars, power windows, and wipers), and power supplies. The film capacitor of the present invention also can be suitably used for these applications.

[Example]

Hereinafter, the present invention will be described in detail with reference to Examples. Characteristics are measured and evaluated by the following method.

(1) Cold xylene soluble fraction (CXS)

0.5 g of a polypropylene resin sample was dissolved in 100 ml of xylene at 135°C, left to stand to cool, and recrystallized in a constant temperature water bath at 20°C for one hour to determine the weight (X (g)) of the polypropylene-based component dissolved in the filtrate by chromatography. Calculation was carried out by the following formula using an accurately measured weight ($X_0$ (g)) of the 0.5 g sample:

$$CXS\ (\%)\ =\ (X/X_0)\ \times\ 100$$

(2) Mesopentad fraction (mmmm)

The mesopentad fraction (mmmm) of a polypropylene resin or a biaxially oriented polypropylene film dissolved in a solvent as a sample was determined using $^{13}$C-NMR under the following conditions (Reference Literature: Shinnban Koubunnshi Bunseki Handbook (Polymer Analysis Handbook New Edition), edited by THE JAPAN SOCIETY FOR ANALYTICAL CHEMISTRY, Polymer Analysis Research Council, 1995, P609-611) .

A. Measurement conditions

Apparatus: DRX-500 manufactured by Bruker Corporation
Measurement nucleus: $^{13}$C nucleus (resonance frequency: 125.8 MHz)
Measured concentration: 10% by weight
Solvent: Benzene/Deuterated orthodichlorobenzene = 1:3 mixed solution in mass ratio
Measurement temperature: 130°C
Spin rotation speed: 12 Hz
NMR sample tube: 5 mm tube
Pulse width: 45° (4.5 μs)
Pulse repetition time: 10 seconds
Data points: 64 K
Conversion count: 10,000 times
Measurement mode: Complete decoupling

B. Analysis conditions

Fourier transform analysis was carried out with a line broadening factor (LB) being set to 1.0 and the mmmm peak was determined to be 21.86 ppm. Peak separation was carried out using WINFIT software (manufactured by Bruker Corporation). In this peak separation, peak separation was carried out as described below from the high magnetic field side and automatic fitting was further carried out using attached software. After the peak separation was optimized, the total of the peak fraction of mmmm was determined. The above measurement was carried out 5 times and the average value of the measured values was determined to be the mesopentad fraction (mmmm) of this sample.

Peaks

(a) mrrm
(b) (c) rrrm (separated as two peaks)
(d) rrrr
(e) mrmr
(f) mrmm + rmrr
(g) mmrr
(h) rmmr
(i) mmmr
(j) mmmm

(3) Melt flow rate (MFR)

The melt flow rate was measured in accordance with JIS K7210 (1995) Condition M (230°C, 2.16 kg).

(4) Melt tension (MS)

The melt tension was measured in accordance with the equipment for MFR measurement described in JIS K7210 (1999). A strand was prepared by heating a propylene resin sample to 230°C and discharging the melted polymer at an extrusion speed of 15 mm/minute using a melt tension tester manufactured by Toyo Seiki Seisaku-sho, Ltd. The tensile force when this strand was pulled at a speed of 6.5 m/minute was measured to determine the melt tension.

(5) First melting peak Tm1 and second melting peak Tm2

5 mg of the biaxially oriented polypropylene film was encapsulated in an aluminum pan as a sample. The first melting peak Tm1 and the second melting peak Tm2 of the sample were measured using a differential scanning calorimeter (DSC) (RDC220, manufactured by Seiko Electronic Industry Co., Ltd.). The first temperature rising (first run) was carried out under nitrogen atmosphere from room temperature to 280°C at 40 °C/minute and the temperature was maintained for 5 minutes. Thereafter, the sample was cooled to 30°C at 40 °C/minute and the temperature was maintained for 5 minutes. The melting peak observed in the first run was determined. Subsequently, the second temperature rising (second run) was carried out also under nitrogen atmosphere from 30°C to 280°C at 40 °C/minute and the temperature was maintained for 5 minutes. Thereafter, the sample was cooled to 30°C at 40 °C/minute. The melting peak observed in the second run was determined. This measurement was carried out three times. The first melting peak Tm1 of the biaxially oriented polypropylene film of the present invention was determined to be the average value of three data of the melting peak existing at the highest temperature side determined in the first run. The second melting peak Tm2 of the biaxially oriented polypropylene film of the present invention was determined to be the average value of three data of the melting peak existing at the highest temperature side determined in the second run.

(6) Glossiness

The glossiness was measured in accordance with JIS K7105 (1981) under the conditions of an incident angle of 60° and an acceptance angle of 60° using a digital variable angle gloss meter UGV-5D manufactured by Suga Test Instruments Co., Ltd. This measurement was carried out five times. The glossiness of the biaxially oriented polypropylene film of the present invention was determined to be the average value of the measured values.

(7) Heat shrinkage ratio at 120°C and 140°C

Five samples were cut out from the biaxially oriented polypropylene film in the longitudinal direction or the width direction so that the cut sample has a size of 200 mm in a measurement direction and 10 mm in orthogonal direction to the measurement direction. The sample was marked at the positions of 50 mm from each edge to form a sample having a test length of 100 mm. Subsequently, 3 g of a load was attached to the sample and the attached sample was hung in an oven in which the temperature was maintained at 120°C or 140°C. After heating for 15 minutes, the sample was taken out and cooled at room temperature. Thereafter, a dimension ($l_1$) was measured and a heat shrinkage ratio was determined in accordance with the following formula. The heat shrinkage ratio of the biaxially oriented polypropylene film of the present invention was determined to be the average value of heat shrinkage ratios of respective five samples in the longitudinal direction and width direction.

$$\text{Heat shrinkage ratio} = \{(l_0 - l_1)/l_0\} \times 100 \ (\%)$$

(8) Film thickness

The thickness of a micrometer method was measured in accordance with JIS C2330 (2001) 7. 4. 1. 1.

(9) Ash content

The ash content was measured in accordance with JIS C2330 (1995). An initial mass $W_0$ of the biaxially oriented polypropylene film was placed in a platinum crucible. First, the biaxially oriented polypropylene film was sufficiently burned by a gas burner, and then the sample was treated in an electric furnace at 750°C to 800°C for one hour to form ash completely. The mass of the obtained ash $W_1$ was measured to determine the ash content in accordance with the following formula.

$$Ash\ content = (W_1-W_0) \times 1,000,000\ (ppm)$$

(10) Surface wet tension

The surface wet tension was measured in accordance with a method defined in JIS K6768 (1999) using a mixed liquid of formaldehyde and ethylene glycol monoethyl ether.

(11) Surface resistance of metal film

The strip made by sampling a metal film-laminated film having a size of 10 mm in the longitudinal direction and 50 mm in the width direction was determined to be a sample. The resistance of the metal film was measured across a length of 30 mm in the width direction by a four-terminal method. The obtained measured value was multiplied by the sample width (10 mm) and divided by the distance between the electrodes (30 mm) to calculate the surface resistance value per 10 mm × 10 mm. The unit of the surface resistance value is defined as $\Omega/\square$.

(12) Film formation stability

The number of breaks of the film during forming the biaxially oriented polypropylene film in each of Examples and Comparative Examples described below was visually observed to evaluate the film formation stability. The number of breaks of the film in the longitudinal stretching or the transverse stretching during film formation for 1 hour was observed to evaluate the film formation stability in accordance with the following criteria.
○ (Excellent): No film break
Δ (Good): Film breaks one time
× (Poor): Film breaks two times or more

(13) Withstand voltage characteristics at high temperature

The dielectric breakdown of the biaxially oriented polypropylene film was measured in accordance with JIS C2330 (2001) by placing electrodes in a hot air oven in which the temperature was controlled to 125°C. The measurement was carried out five times and the average value of the measured values was determined. The determined value was divided by the film thickness determined in the section (8) to determine the dielectric breakdown voltage per 1 $\mu$m (V/$\mu$m) at high temperature. The withstand voltage characteristics at high temperature was evaluated in accordance with the following criteria based on the above dielectric breakdown voltage at high temperature.
○ (Excellent): 450 V/$\mu$m or more
Δ (Good): 400 V/$\mu$m or more and less than 450 V/$\mu$m
× (Poor): Less than 400 V/$\mu$m

(Example 1)

A. Production of polypropylene resin composition

To the mixed and heated solution of anhydrous magnesium chloride, decane, and 2-ethylhexyl alcohol, phthalic anhydride was added, and the resultant mixture was further stirred. The solution was cooled and, thereafter, the solution was added dropwise to titanium tetrachloride cooled to -20°C. Subsequently, the temperature of the mixture was raised and diisobutyl phthalate was added. The resultant mixture was stirred and thereafter the mixture was filtered to give a solid. The obtained solid was washed with decane and hexane to give a titanium catalyst used for propylene polymerization.
Propylene was polymerized using the above titanium catalyst, triethylaluminum as a cocatalyst, dicyclopentyldimethoxysilane, and hydrogen as a chain transfer agent. After the obtained product was deactivated, the product was sufficiently washed with propylene monomer to give a polypropylene resin. This polypropylene resin has a melting point of 165°C, a MFR of 4.0 g/10 minutes, and a mesopentad fraction (mmmm) of 0.980.
0.1% by mass of BHT as an antioxidant and 0.2% by mass of Irganox-1010 also as an antioxidant were added to 99.7% by mass of the obtained polypropylene resin. Thereafter, the resultant mixture was kneaded at a temperature of 260°C and formed in the form of pellets to give a polypropylene resin composition.

B. Production of film

100% by mass of the polypropylene resin composition was fed to a single-screw melt extruder and melt extrusion was carried out at 220°C. Foreign matters were removed with a sintered filter that removed foreign matters having a size of 25 $\mu$m or more. The shear rate applied in a T die during extrusion was 500 sec$^{-1}$. The melted sheet discharged from the T die was tightly attached onto a casting drum the surface temperature of which was controlled at 90°C and casted so as to be in contact with the drum for 3 seconds to give an unstretched sheet. In order to tightly attach the melted sheet on the casting drum, an air knife and blown air at end spots were used. Subsequently, the unstretched sheet was preheated using a heated ceramic roll. A radiation heater the surface temperature of which is heated at 800°C was approached to the film at a distance of 15 mm and the film was heated so that the film temperature reached to 115°C. Thereafter, the film was stretched 6.2 times in the longitudinal direction. In this stretching, the stretching speed in the longitudinal direction was 3,800,000 %/minute and the neckdown ratio was 98%. Subsequently, the end parts of the film were gripped with clips and the film was stretched 10 times at 145°C in the width direction at a stretching speed of 27,000 %/minute. Furthermore, heat treatment at 155°C for 6 seconds was carried out to relax the film in a ratio of 10% in the width direction. Thereafter, the film was slowly cooled to room temperature. Thereafter, corona discharge treatment was applied to one surface of the film at a treatment strength of 25 W·min/m$^2$ and the edge parts of the film gripped by the clips were cut to remove. Here, the surface-treated surface is called the A surface and the other untreated surface is called the B surface. The film the edge parts of which were removed was wound by a winder to give the biaxially oriented polypropylene film having a thickness of 2.5 $\mu$m. No film break was observed during the film formation for 1 hour. Physical properties of the obtained film are listed in Table 1.

(Example 2)

The biaxially oriented polypropylene film having a thickness of 2.5 $\mu$m was obtained by preparing the film in the same method as the method in Example 1 except that the stretching speed in the longitudinal stretching process was set to be 3,550,000 %/minute. No film break was observed during the film formation for 1 hour. Physical properties of the obtained film are listed in Table 1.

(Example 3)

The biaxially oriented polypropylene film having a thickness of 2.5 $\mu$m was obtained by preparing the film in the same method as the method in Example 1 except that the added amount of triethylaluminum being the cocatalyst at the time of producing a polypropylene resin was adjusted to change the mesopentad fraction (mmmm) of the polypropylene resin to 0.950. No film break was observed during the film formation for 1 hour. Physical properties of the obtained film are listed in Table 1.

(Example 4)

The biaxially oriented polypropylene film having a thickness of 2.5 $\mu$m was obtained by preparing the film in the same method as the method in Example 1 except that the surface temperature of the radiation heater during the longitudinal stretching process was set to 500°C. Film break occurred one time during the film formation for 1 hour. Physical properties of the obtained film are listed in Table 1.

(Example 5)

The biaxially oriented polypropylene film having a thickness of 2.5 $\mu$m was obtained by preparing the film in the same method as the method in Example 1 except that the stretching speed in the longitudinal stretching process was set to be 5,000,000 %/minute. No film break was observed during the film formation for 1 hour. Physical properties of the obtained film are listed in Table 1.

(Example 6)

The biaxially oriented polypropylene film having a thickness of 2.5 $\mu$m was obtained by preparing the film in the same method as the method in Example 1 except that the stretching speed in the longitudinal stretching process was set to be 5,200,000 %/minute. Film break occurred one time during the film formation for 1 hour. Physical properties of the obtained film are listed in Table 1.

(Example 7)

The biaxially oriented polypropylene film having a thickness of 2.5 μm was obtained by preparing the film in the same method as the method in Example 1 except that the stretching speed in the longitudinal stretching process was set to be 5,400,000 %/minute. Film break occurred one time during the film formation for 1 hour. Physical properties of the obtained film are listed in Table 1.

(Example 8)

The biaxially oriented polypropylene film having a thickness of 2.5 μm was obtained by preparing the film in the same method as the method in Example 1 except that the stretching speed in the longitudinal stretching process was set to be 5,500,000 %/minute. Film break occurred one time during the film formation for 1 hour. Physical properties of the obtained film are listed in Table 1.

(Comparative Example 1)

The biaxially oriented polypropylene film having a thickness of 2.5 μm was obtained by preparing the film in the same method as the method in Example 1 except that the stretching speed in the longitudinal stretching process was set to be 5,600,000 %/minute. Film break occurred three times during the film formation for 1 hour. Physical properties of the obtained film are listed in Table 1.

(Comparative Example 2)

The biaxially oriented polypropylene film having a thickness of 2.5 μm was obtained by preparing the film in the same method as the method in Example 1 except that the stretching speed in the longitudinal stretching process was set to be 3,300,000 %/minute. No film break was observed during the film formation for 1 hour. Physical properties of the obtained film are listed in Table 1.

(Comparative Example 3)

The biaxially oriented polypropylene film having a thickness of 2.5 μm was obtained by preparing the film in the same method as the method in Example 1 except that the added amount of hydrogen at the time of producing a polypropylene resin was adjusted to change the mesopentad fraction (mmmm) of the polypropylene resin to 0.940. No film break was observed during the film formation for 1 hour. Physical properties of the obtained film are listed in Table 1.

(Comparative Example 4)

A biaxially oriented polypropylene film was tried to be prepared in the same method as the method in Example 1 except that the surface temperature of the radiation heater during the longitudinal stretching process was set to 450°C. As a result, film break occurred many times and thus the biaxially oriented polypropylene film was failed to be obtained.

(Comparative Example 5)

The biaxially oriented polypropylene film having a thickness of 2.5 μm was obtained by preparing the film in the same method as the method in Example 1 except that the added amount of hydrogen at the time of producing a polypropylene resin was adjusted to change the mesopentad fraction (mmmm) of the polypropylene resin to 0.920 and the stretching speed in the longitudinal stretching process was set to be 5,800,000 %/minute. Film break occurred three times during the film formation for 1 hour. Physical properties of the obtained film are listed in Table 1.

Table 1

| | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 |
|---|---|---|---|---|---|---|---|---|---|---|---|---|---|---|---|
| Melting peak | Tm1 | °C | 177 | 176 | 176 | 180 | 178 | 179 | 180 | 180 | 181 | 174 | 175 | – | 181 |
| | Tm2 | °C | 170 | 170 | 169 | 170 | 170 | 170 | 170 | 170 | 170 | 170 | 168 | – | 165 |
| | Tm1-Tm2 | °C | 7 | 6 | 7 | 10 | 8 | 9 | 10 | 10 | 11 | 4 | 7 | – | 16 |
| Mesopentad fraction of film (mmmm) | | – | 0.980 | 0.980 | 0.950 | 0.980 | 0.980 | 0.980 | 0.980 | 0.980 | 0.980 | 0.980 | 0.940 | – | 0.920 |
| Glossiness | A Surface | % | 130 | 130 | 125 | 130 | 130 | 130 | 130 | 130 | 130 | 130 | 124 | – | 119 |
| | B Surface | % | 133 | 133 | 128 | 131 | 133 | 133 | 133 | 133 | 133 | 133 | 127 | – | 124 |
| Heat shrinkage ratio at 120°C | Longitudinal direction | % | 3.5 | 3.3 | 3.8 | 4.0 | 3.8 | 4.0 | 4.3 | 4.5 | 4.6 | 3.1 | 4.2 | – | 5.2 |
| | Width direction | % | -0.2 | -0.1 | 0.2 | -0.3 | -0.2 | -0.3 | -0.4 | -0.5 | -0.6 | -0.1 | 0.3 | – | 0.8 |
| Heat shrinkage ratio at 140°C | Longitudinal direction | % | 6.0 | 5.6 | 6.2 | 7.0 | 6.3 | 6.7 | 7.1 | 7.2 | 7.3 | 5.7 | 6.6 | – | 8.1 |
| | Width direction | % | 2.4 | 2.5 | 2.8 | 2.5 | 2.4 | 2.4 | 2.4 | 2.4 | 2.4 | 1.9 | 2.9 | – | 2.9 |
| Film thickness | | μm | 2.5 | 2.5 | 2.5 | 2.5 | 2.5 | 2.5 | 2.5 | 2.5 | 2.5 | 2.5 | 2.5 | – | 2.5 |
| Film formation stability | | | ○ | ○ | ○ | △ | ○ | △ | △ | △ | × | ○ | ○ | × | × |
| Withstand voltage characteristics at high temperature | | | ○ | △ | △ | △ | ○ | ○ | △ | △ | × | × | × | × | × |

Industrial Applicability

The biaxially oriented polypropylene film of the present invention can be provided as a biaxially oriented polypropylene film having excellent withstand voltage characteristics under high temperature conditions when the film is used for the dielectric substance of a capacitor because the melting peak of the film is controlled.

**Claims**

**1.**   A biaxially oriented polypropylene film comprising:

a polypropylene resin as a main component, wherein
a first melting peak Tm1 existing at a highest temperature side in a first temperature rising curve obtained by measuring melting peaks using DSC is 176°C to 180°C, **characterized in that**
a temperature difference Tm1-Tm2 between a second melting peak Tm2 existing at a highest temperature side in a second temperature rising curve obtained when melting peaks are measured again after first temperature rising and cooling by measuring melting peaks using DSC and the first melting peak Tm1 is 3°C to 15°C, wherein the first melting peak Tm1 and second melting peak Tm2 are obtained as described in the description.

**EP 3 363 616 B1**

**2.** The biaxially oriented polypropylene film according to claim 1, wherein glossiness is 120% to 150% on both surfaces, and wherein the glossiness is measured as described in the description.

**3.** Use of the biaxially oriented polypropylene film according to claim 1 or 2 as a dielectric substance of a capacitor.

**4.** A metal film-laminated film made by forming a metal film on at least one surface of the biaxially oriented polypropylene film according to claim 1 or 2.

**5.** A film capacitor made by winding the metal film-laminated film according to claim 4.


**Patentansprüche**

**1.** Biaxial orientierter Polypropylenfilm, der
ein Polypropylenharz als Hauptkomponente aufweist, wobei
ein erster Schmelzpeak Tm1, der auf einer Seite mit der höchsten Temperatur in einer ersten Temperaturanstiegskurve existiert, der durch Messen von Schmelzpeaks unter Verwendung von DSC erhalten wird, 176 °C bis 180 °C beträgt, **gekennzeichnet dadurch, dass**
eine Temperaturdifferenz Tm1-Tm2 zwischen einem zweiten Schmelzpeak Tm2, der auf einer Seite mit der höchsten Temperatur in einer zweiten Temperaturanstiegskurve existiert, der durch Messen von Schmelzpeaks unter Verwendung von DSC erhalten wird, wenn Schmelzpeaks erneut gemessen werden, nachdem die erste Temperatur angestiegen ist und abgekühlt ist, und dem ersten Schmelzpeak Tm1 3 °C bis 15 °C beträgt, wobei der erste Schmelzpeak Tm1 und der zweite Schmelzpeak Tm2 wie in der Beschreibung beschrieben erhalten werden.

**2.** Biaxial orientierter Polypropylenfilm nach Anspruch 1, wobei der Glanz auf beiden Oberflächen 120% bis 150% beträgt und wobei der Glanz wie in der Beschreibung beschrieben gemessen wird.

**3.** Verwendung des biaxial orientierten Polypropylenfilms nach Anspruch 1 oder 2 als dielektrische Substanz eines Kondensators.

**4.** Metallfilm-laminierter Film, hergestellt durch Bilden eines Metallfilms auf mindestens einer Oberfläche des biaxial orientierten Polypropylenfilms nach Anspruch 1 oder 2.

**5.** Filmkondensator, hergestellt durch Aufwickeln des mit Metallfilm-laminierten Films nach Anspruch 4.


**Revendications**

**1.** Film de polypropylène à orientation biaxiale comprenant :

une résine de polypropylène comme composant principal, où
un premier pic de fusion Tm1 existant d'un côté de la température la plus élevée dans une première courbe d'augmentation de température obtenue en mesurant des pics de fusion en utilisant DSC est entre 176°C et 180°C, **caractérisé en ce que**
une différence de température Tm1-Tm2 entre un deuxième pic de fusion Tm2 existant d'un côté de la température la plus élevée dans une deuxième courbe d'augmentation de température obtenue lorsque des pics de fusion sont mesurés à nouveau après la première augmentation de température et le refroidissement en mesurant les pics de fusion en utilisant DSC et le premier pic de fusion Tm1 est entre 3°C et 15°C, où le premier pic de fusion Tm1 et le deuxième pic de fusion Tm2 sont obtenus comme décrit dans la description.

**2.** Film de polypropylène à orientation biaxiale selon la revendication 1, dans lequel la brillance est entre 120% et 150% sur les deux surfaces, et où la brillance est mesurée comme décrit dans la description.

**3.** Utilisation du film de polypropylène à orientation biaxiale selon la revendication 1 ou 2 comme substance diélectrique d'un condensateur.

**4.** Film stratifié de film métallique réalisé en formant un film métallique sur au moins une surface du film de polypropylène à orientation biaxiale selon la revendication 1 ou 2.

**5.** Condensateur à film réalisé en enroulant le film stratifié de film métallique selon la revendication 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008133351 A
- JP 2010280795 A
- WO 2015012324 A1
- WO 2015129851 A1
- JP S62121704 B
- JP 2869606 B

**Non-patent literature cited in the description**

- Shinnban Koubunnshi Bunseki Handbook (Polymer Analysis Handbook New Edition). Polymer Analysis Research Council. 1995, 609-611